# EUROPEAN PATENT APPLICATION

(11) **EP 4 343 419 A1**
(43) Date of publication of application: **27.03.2024**
(21) Application number: 22804643.9
(22) Date of filing: 16.05.2022
(51) Int. Cl.: G02F 1/155, G02C 7/10, G02F 1/15, G02F 1/161

(54) **ELECTRONIC ELEMENT FOR ELECTRONIC DIMMING SPECTACLES**

(30) Priority: 17.05.2021 JP 2021082862
(71) Applicant: Hoya Lens Thailand Ltd., Pathumthani 12130 (TH)
(72) Inventor: MIYAZAKI, Shigeki, Tokyo 160-8347 (JP); KAWAKAMI, Hironori, Tokyo 160-8347 (JP)
(74) Representative: Hoffmann Eitle
(86) International application number: PCT/JP2022/020390
(87) International publication number: WO 2022/244732

(57) **Abstract**

There is provided an electron element (20) for electronic light control spectacles, which is combined with a lens (19) and exhibits a light control effect when electric energy is supplied, including substrates (21, 22), a pair of transparent electrode layers (24, 25) provided on the substrates, and a light control layer (26) provided between the pair of transparent electrode layers, a sealing material (32) that covers at least a part of the transparent electrode layer is provided in a peripheral area (E2) outside a light control area (E1) in which the pair of transparent electrode layers and the light control layer overlap, and each of the pair of transparent electrode layers has a projecting part (24a, 25a) extending to the peripheral area, and the projecting part is in contact with the sealing material without other conductive members being interposed therebetween.

## Description

### [Technical Field]

The present invention relates to an electronic element for electronic light control spectacles.

### [Background Art]

There are electronic light control spectacles that include electronic elements on the surface or inside of lenses, and change optical properties (light transmittance, color, etc.) when electric energy is supplied to the electronic elements to obtain a light control effect. An electrochromic element (EC element) is known as an example of an electronic element for light control. The electrochromic element can be formed into a curved shape corresponding to the spherical lens surface, and is suitable as an electronic element for electronic light control spectacles.

Electrochromic elements utilize a phenomenon (electrochromism) in which reversible optical absorption occurs according to an electrochemical oxidation-reduction reaction when a charge is added to a substance. Electrochromic elements for light control generally have a laminated structure in which a pair of transparent electrode layers (transparent conductive films) for a positive electrode and a negative electrode are arranged with a light control layer made of a material that exhibits electrochromism therebetween. Indium tin oxide (ITO) obtained by adding tin oxide to indium oxide is often used as a material for the transparent electrode layer.

### [Citation List]

### [Patent Literature]

[PTL 1] Japanese Patent No. 6624206

### [Summary of Invention]

### [Technical Problem]

It is desirable that the lens for spectacles have various shapes according to user preferences and the design of the spectacle frame. On the other hand, in electronic light control spectacles, the shape of the lens may be restricted due to the structure of the electronic element for light control combined with the lens. Therefore, in order to increase the product value of the electronic light control spectacles, there is a need for an electronic element that does not inhibit the degree of freedom in a lens shape.

The present invention has been made in order address the above problems, and an objective of the present invention is to provide an electronic element for electronic light control spectacles which can increase a degree of freedom in a lens shape.

### [Solution to Problem]

The present invention provides an electronic element for electronic light control spectacles, which is combined with a lens and exhibits a light control effect when electric energy is supplied, which includes substrates, a pair of transparent electrode layers provided on the substrates, and a light control layer provided between the pair of transparent electrode layers, a sealing material that covers at least a part of the transparent electrode layer being provided in a peripheral area outside a light control area in which the pair of transparent electrode layers and the light control layer overlap, and each of the pair of transparent electrode layers having a projecting part extending to the peripheral area, and the projecting part being in contact with the sealing material without other conductive members being interposed therebetween.

A pair of electrode terminals connected to the pair of transparent electrode layers and exposed on the outer surfaces of the substrates may be provided in the peripheral area of the electronic element.

In one aspect, the pair of transparent electrode layers are formed of IZO.

In another aspect, the pair of transparent electrode layers include a conductive fiber layer formed of conductive fibers.

The present invention is suitable for an electrochromic element that causes a reversible change in optical properties due to an oxidation-reduction reaction in the light control layer when a voltage is applied to the pair of transparent electrode layers.

### [Advantageous Effects of Invention]

According to the present invention, it is possible to obtain an electronic element for electronic light control spectacles which has a simple electrode structure with excellent shape selectivity and can increase a degree of freedom in a lens shape.

### [Brief Description of Drawings]

[Fig. 1]

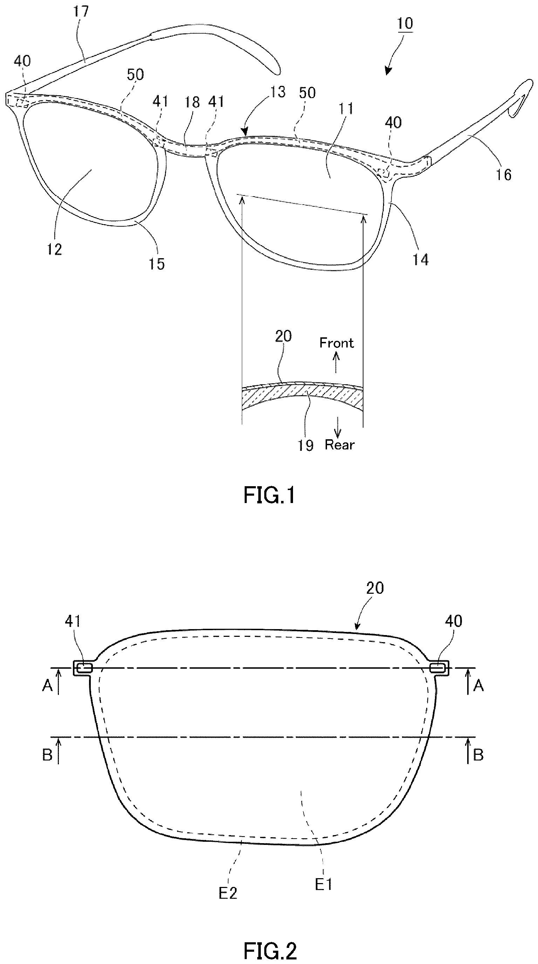

   Fig. 1 is a perspective view of electronic light control spectacles.
[Fig. 2]
   Fig. 2 is a front view of an electrochromic element constituting electronic light control spectacles.
[Fig. 3]

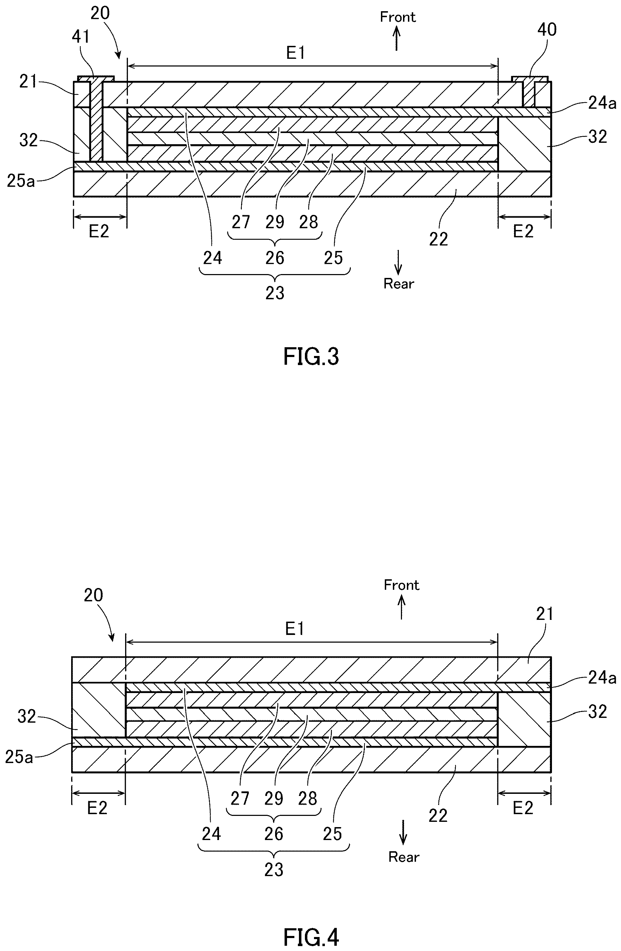

   Fig. 3 is a cross-sectional view taken along the line A-A in Fig. 2.
[Fig. 4]
   Fig. 4 is a cross-sectional view taken along the line B-B in Fig. 2.
[Fig. 5]

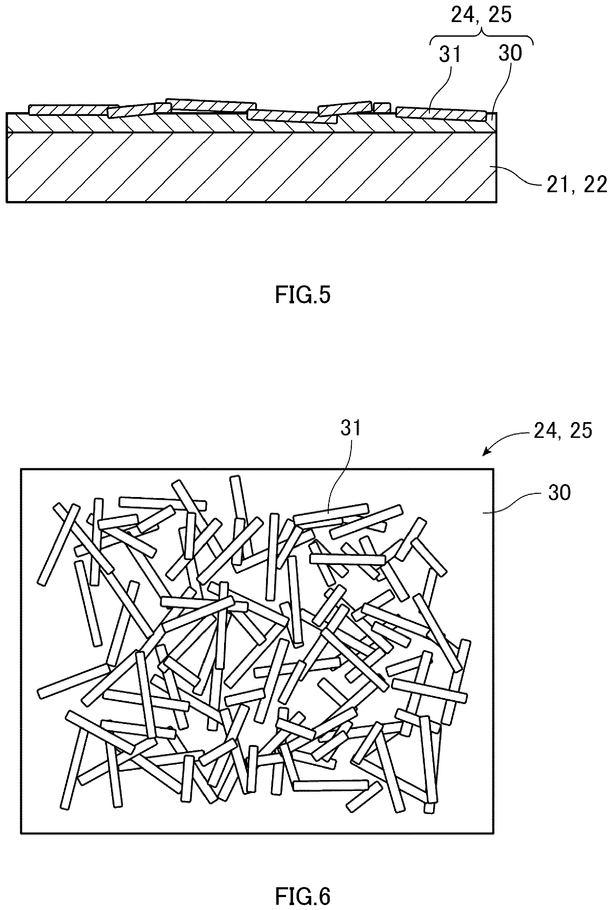

   Fig. 5 is a cross-sectional view of a transparent electrode layer according to a second embodiment constituting an electrochromic element.
[Fig. 6]
   Fig. 6 is a front view of the transparent electrode layer according to the second embodiment.

### [Description of Embodiments]

Fig. 1 shows an electronic light control spectacles 10 to which the present invention is applied. The electronic light control spectacles 10 includes left and right light control lenses 11 and 12 and a spectacle frame 13. The spectacle frame 13 includes left and right annular rims 14 and 15 that hold the light control lenses 11 and 12, temples 16 and 17 that extend from the left and right rims 14 and 15, and a bridge 18 that connects the left and right rims 14 and 15.

As shown in the cross-sectional view in Fig. 1, the light control lenses 11 and 12 are electronic light control lenses in which an electrochromic element (EC element) 20, which is an electronic element for light control, is superimposed on the surface of a lens 19, which is an optical element.

The electrochromic element 20 includes an electrochromic material that reversibly changes optical properties according to an oxidation-reduction reaction when a voltage is applied, and is transparent (highest visible light transmittance) in a normal state when no voltage is applied and is colored in a predetermined color corresponding to the electrochromic material when a voltage is applied and thus lowers light transmittance. The configuration of the electrochromic element 20 will be described below.

In the spectacle frame 13, a power source, a control unit, and an operation unit (not shown) are provided. In addition, a power supply wiring member 50 for electrically connecting the electrochromic element 20 of the light control lenses 11 and 12 and a power source is provided inside the spectacle frame 13. A pair of a first electrode terminal 40 and a second electrode terminal 41 provided in the electrochromic element 20 are connected to the power supply wiring member 50.

When a user operates the operation unit, the control unit controls current application to the electrochromic element 20, and a light control effect of the light control lenses 11 and 12 is obtained. The control unit may change the light control effect (light transmittance) of the light control lenses 11 and 12 in a plurality of stages according to the operation of the operation unit.

Fig. 2 is a front view of the electrochromic element 20. Fig. 3 and Fig. 4 are cross-sectional views of the electrochromic element 20. The electrochromic element 20 shown in Fig. 3 and Fig. 4 is in a flat state (not in a curved shape along the surface of the lens 19) when it has not been attached to the lens 19.

The electrochromic element 20 includes a pair of a first substrate 21 and a second substrate 22 and an electrochromic film 23 interposed between the first substrate 21 and the second substrate 22.

The first substrate 21 and the second substrate 22 are formed of a polycarbonate (PC) substrate. Here, the thickness of the polycarbonate substrate is not limited, but may be about several hundreds of µm.

The electrochromic film 23 includes a pair of a first transparent electrode layer 24 and a second transparent electrode layer 25, and an electrochromic layer 26 which is a light control layer provided between the first transparent electrode layer 24 and the second transparent electrode layer 25. In addition, the electrochromic layer 26 includes a reduction layer 27 arranged on the side of the first transparent electrode layer 24, an oxidation layer 28 arranged on the side of the second transparent electrode layer 25, and an electrolyte layer 29 provided between the reduction layer 27 and the oxidation layer 28.

For the reduction layer 27, the oxidation layer 28 and the electrolyte layer 29 constituting the electrochromic layer 26, existing materials can be used.

The reduction layer 27 is a layer that develops colors according to a reduction reaction. For the reduction layer 27, existing reduced electrochromic compounds can be used. It does not matter whether it is an organic substance or an inorganic substance, and although not limited, examples include azobenzene, anthraquinone, diarylethene, dihydroprene, dipyridine, styryl, styryl spiropyran, spirooxazine, spirothiopyran, thioindigo, tetrathiafulvalene, terephthalic acid, triphenylmethane, triphenylamine, naphthopyran, viologen, pyrazoline, phenazine, phenylenediamine, phenoxazine, phenothiazine, phthalocyanine, fluoran, fulgide, benzopyran, and metallocene substances, tungsten oxide, molybdenum oxide, iridium oxide, and titanium oxide.

The oxidation layer 28 is a layer that develops colors according to an oxidation reaction. For the oxidation layer 28, existing oxidized electrochromic compounds can be used. It does not matter whether it is an organic substance or an inorganic substance, and although not limited, for example, it can be selected from among a composition containing a radically polymerizable compound including triarylamine, a Prussian blue type complex, nickel oxide, iridium oxide and the like.

The electrolyte layer 29 has electronic insulation and ionic conductivity and is preferably transparent. The electrolyte layer 29 may be a solid electrolyte, a gel, or a liquid. In order to maintain high ionic conductivity, a gel is preferable. Although not limited, for example, existing electrolyte materials such as inorganic ion salts such as alkali metal salts and alkaline earth metal salts, quaternary ammonium salts and acids can be used.

The first transparent electrode layer 24 and the second transparent electrode layer 25 are thin film-like electrode layers having high visible light transmittance and high conductivity, and are formed according to either the first or second embodiment described below.

The first transparent electrode layer 24 and the second transparent electrode layer 25 in the first embodiment are transparent conductive films made of indium zinc oxide (IZO), which is a composite oxide of indium oxide and zinc oxide. When the IZO film formed on the first substrate 21 and the second substrate 22 is annealed (heated), the first transparent electrode layer 24 and the second transparent electrode layer 25 having favorable conductive properties and transmittance properties are obtained.

Conventionally, indium tin oxide (ITO) has been widely used as a material for the transparent electrode. The first transparent electrode layer 24 and the second transparent electrode layer 25 made of IZO have better performance in resistance properties, transmittance properties, and bending resistance than transparent electrode layers with the same thickness and made of ITO.

For example, when the first substrate 21 and the second substrate 22 are polycarbonate substrates, since they have lower heat resistance than glass substrates, the transparent electrode layers 24 and 25 formed on the substrates 21 and 22 are annealed at a relatively low temperature (for example, 200°C or lower). It is known that, when an annealing treatment is performed in such a low temperature range, the specific resistance of the transparent conductive film made of IZO takes on a value smaller than the specific resistance of the transparent conductive film made of ITO (for example, equal to or less than half if the annealing temperature is about 100°C).

In addition, regardless of whether the transparent conductive film is made of IZO or ITO, the transmittance after the annealing treatment is higher over the entire visible light wavelength range than that before the annealing treatment, but particularly an experiment result in which the transparent conductive film made of IZO has higher light transmittance after the annealing treatment than the transparent conductive film made of ITO is obtained.

In addition, the transparent conductive film made of IZO has better resistance to a bending load than the transparent conductive film made of ITO. For example, when a durability test in which a transparent conductive film is repeatedly bent a plurality of times under the same conditions is performed, experiment results in which the transparent conductive film made of IZO has a smaller resistance change rate and has performance that is less affected by bending than the transparent conductive film made of ITO are obtained. In addition, the transparent conductive film made of IZO is less prone to damage such as cracks when it is curved when combined with the lens 19 than the transparent conductive film made of ITO.

As described above, when the transparent conductive film made of IZO is used, it is possible to obtain the first transparent electrode layer 24 and the second transparent electrode layer 25 with low resistance, high light transmittance, and excellent resistance to bending and curving.

Fig. 5 and Fig. 6 show the first transparent electrode layer 24 and the second transparent electrode layer 25 according to the second embodiment. The transparent electrode layers 24 and 25 have a configuration in which a conductive fiber layer 31 made of conductive fibers is provided on a transparent conductive film 30 made of ITO.

As the conductive fibers constituting the conductive fiber layer 31, carbon nanotubes or silver nanowires are preferable. The conductive fiber layer 31 is obtained by arranging carbon nanotubes and silver nanowires on the transparent conductive film 30 in a scattering manner (without regularity) and forming a mesh-like matrix.

The carbon nanotubes and silver nanowires constituting the conductive fiber layer 31 have very high conductivity. Therefore, although a 2-layer structure of the transparent conductive film 30 and the conductive fiber layer 31 is used, compared to when the transparent electrode layer is formed of only ITO, it is possible to obtain excellent conductive properties without increasing the overall thickness of the first transparent electrode layer 24 and the second transparent electrode layer 25.

Since the conductive fiber layer 31 itself is formed by arranging very thin conductive fibers in a thin and scattering manner, the light transmittance of the first transparent electrode layer 24 and the second transparent electrode layer 25 is not impaired. Here, the first transparent electrode layer 24 and the second transparent electrode layer 25 formed of the transparent conductive film 30 and the conductive fiber layer 31 may have lower low resistance than the transparent electrode layer formed of only ITO. In addition, the conductive fiber layer 31 formed of carbon nanotubes and silver nanowires has excellent strength and contributes to improving the resistance of the first transparent electrode layer 24 and the second transparent electrode layer 25 to bending and curving.

Therefore, when the transparent conductive film 30 and the conductive fiber layer 31 are combined, compared to when the transparent electrode layer is formed of only ITO, it is possible to obtain the first transparent electrode layer 24 and the second transparent electrode layer 25 with low resistance, high light transmittance, and excellent resistance to bending and curving.

Here, as a modification example different from the configuration shown in Fig. 5 and Fig. 6, the first transparent electrode layer 24 and the second transparent electrode layer 25 may be formed as a transparent electrode layer having a single-layer structure composed of only conductive fibers aggregated in a sheet form (carbon nanotubes or silver nanowire).

As shown in Fig. 2 to Fig. 4, in the electrochromic element 20, the area in which the first transparent electrode layer 24, the second transparent electrode layer 25 and the electrochromic layer 26 overlap is a light control area E1 (active area) in which a color change (transmittance change) occurs due to voltage application. The light control area E1 is positioned at the center of the electrochromic element 20, and the outside of the light control area E1 is a peripheral area E2 in which no color change occurs during voltage application.

As shown in Fig. 3 and Fig. 4, parts the first transparent electrode layer 24 and the second transparent electrode layer 25 extend to the peripheral area E2 to form a projecting part 24a and a projecting part 25a. The projecting part 24a and the projecting part 25a are arranged to be present independently without facing each other in the thickness direction of the electrochromic element 20. Here, there is provided a positional relationship in which, in the peripheral area E2, the projecting part 24a faces the second substrate 22 with an interval therebetween and the projecting part 25a faces the first substrate 21 with an interval therebetween.

In the peripheral area E2 of the electrochromic element 20, a sealing material 32 having adhesive properties is applied between the first substrate 21 and the second substrate 22. The sealing material 32 is arranged in a ring shape surrounding the outside of the light control area E1, and blocks a space between the first substrate 21 and the second substrate 22. The first substrate 21 and the second substrate 22 are fixed to each other with the sealing material 32 therebetween to form the electrochromic element 20 having a laminated structure shown in Fig. 3 and Fig. 4.

As shown in Fig. 3 and Fig. 4, the projecting part 24a and the projecting part 25a are also adhered by the sealing material 32, and the first transparent electrode layer 24 and the second transparent electrode layer 25 are fixed between the first substrate 21 and the second substrate 22. More specifically, the front side of the projecting part 24a is in contact with the rear surface of the first substrate 21, the rear side of the projecting part 24a is in contact with the sealing material 32, and the space between the projecting part 24a and the second substrate 22 is filled with the sealing material 32. In addition, the rear side of the projecting part 25a is in contact with the front surface of the second substrate 22, the front side of the projecting part 25a is in contact with the sealing material 32, and the space between the projecting part 25a and the first substrate 21 is filled with the sealing material 32.

In addition, the sealing material 32 has a sealing function of blocking passage of water and other foreign substances. The sealing material 32 protects the electrochromic film 23 from the external environment.

In addition, the sealing material 32 is formed of an insulating material, and prevents short-circuiting between the first transparent electrode layer 24 and the second transparent electrode layer 25.

As shown in Fig. 2 and Fig. 3, the first electrode terminal 40 that is connected (conductive) to the projecting part 24a of the first transparent electrode layer 24 and the second electrode terminal 41 that is connected (conductive) to the projecting part 25a of the second transparent electrode layer 25 are attached to the electrochromic element 20. The first electrode terminal 40 and the second electrode terminal 41 each are formed of a highly conductive metal material (silver, copper, etc.).

The first electrode terminal 40 passes through a through-hole formed in the first substrate 21 and is connected to the projecting part 24a. The second electrode terminal 41 passes through through-holes formed in the first substrate 21 and the sealing material 32, and is connected to the projecting part 25a. The ends of the first electrode terminal 40 and the second electrode terminal 41 opposite to the side connected to the projecting part 24a and the projecting part 25a are exposed to the outer surface (the front side of the electrochromic element 20) of the first substrate 21.

Although not shown in the drawings, on the front surface (the side of the first substrate 21) and the rear surface (the side of the second substrate 22) of the electrochromic element 20, a coating layer having a predetermined function (such as ultraviolet and infrared transmission control and a lens protection effect) may be formed.

The sheet-like the electrochromic element 20 configured as described above is superimposed on the front side of the lens 19 to form a light control lens 11 and a light control lens 12. The lens 19 has a convex front side and a concave back side. The electrochromic element 20 in combination with the lens 19 changes from the flat shape shown in Fig. 3 and Fig. 4 to a curved shape along the convex surface of the lens 19 (refer to Fig. 1).

As a method of producing the light control lenses 11 and 12, for example, the lens 19 and the electrochromic element 20 are separately produced, the electrochromic element 20 is preformed into a curved shape corresponding to the surface of the lens 19, and the electrochromic element 20 and the lens 19 can be then bonded together. Alternatively, when the lens 19 is molded, it is possible to integrally mold it together with the electrochromic element 20 to obtain the light control lenses 11 and 12.

The completed light control lenses 11 and 12 are incorporated into the rims 14 and 15 of the spectacle frame 13. In the electrochromic element 20, the light control area E1 is positioned (in the opening part) inside the rims 14 and 15. The peripheral area E2 is within the range covered by the rims 14 and 15 and is not exposed to the appearance of the electronic light control spectacles 10. Therefore, when the electronic light control spectacles 10 is completed, it is possible to obtain the light control effect of the light control lenses 11 and 12 throughout the inner sides of the rims 14 and 15.

When the light control lenses 11 and 12 are incorporated into the spectacle frame 13, the first electrode terminal 40 and the second electrode terminal 41 provided in the electrochromic element 20 come into contact with the power supply wiring member 50 arranged inside the spectacle frame 13 in a conduction state.

When the metal first electrode terminal 40 and second electrode terminal 41 are inserted, it is possible to obtain the effect of improving the conductivity and connectivity with the power supply wiring member 50. For example, when the lens 19 and the electrochromic element 20 are combined, the second transparent electrode layer 25 is arranged so that it is not exposed to the front and back of the light control lenses 11 and 12, but it can be electrically connected to the power supply wiring member 50 through the second electrode terminal 41.

As shown in Fig. 1, in the spectacle frame 13 of the electronic light control spectacles 10, the temples 16 and 17 and the bridge 18 are connected to both sides at positions near the upper edges of the left and right rims 14 and 15. The power supply wiring member 50 that supplies power to the electrochromic element 20 of the left and right light control lenses 11 and 12 is disposed along the upper edge side of the spectacle frame 13 through the inside of the bridge 18 or the like. In order to connect to the power supply wiring member 50 arranged in this manner, in the electrochromic element 20, the first electrode terminal 40 and the second electrode terminal 41 are arranged separately on both sides in the left to right direction at a position close to the upper edge of the peripheral area E2 (refer to Fig. 2).

Incidentally, transparent electrodes generally have a higher resistivity than metal electrodes, and when an electrochromic element is driven, there is a risk of a driving voltage decreasing in a part far from the power supply point in the transparent electrode and the occurrence of an uneven color change in the light control layer. In order to prevent such problems, in conventional electrochromic elements, in order to lower the electrical resistance value, a bus electrode, which is a metal electrode, is provided by being laminated on a transparent electrode layer. In a process of producing an electrochromic element, a bus electrode is formed by laminating a metal film on a transparent electrode layer and leaving a part of the metal film by a treatment such as etching.

In the case of electronic light control spectacles, if a bus electrode is present in the active area (the area corresponding to the above light control area E1) inside the rim of the spectacle frame, there is a problem that the aesthetic appearance is impaired, the bus electrode blocks a part of field of view and a feeling of use deteriorates. Therefore, the bus electrode is arranged at a position (an area corresponding to the above peripheral area E2) hidden by the spectacle frame and not visible from the outside. Since the positional condition for providing a bus electrode is the peripheral edge of the lens that overlaps the rim of the spectacle frame, the presence of the bus electrode restricts the external shape of the lens and the rim shape of the spectacle frame. That is, in the case of an electrode structure using a bus electrode, there is a problem in that the degree of freedom in selecting the lens shape (globe shape) and the spectacle frame is reduced.

General lenses for spectacles having no electronic light control function can be produced by freely cutting out shapes from semi-finished lenses, which are a semi-processed product, to accommodate user preferences and various spectacle frames. Also in electronic light control spectacles, it is desirable to improve a feeling of use and the product value by minimizing restrictions on the lens shape and the frame design due to the electrode structure. In addition, in consideration of production efficiency, it is desirable to have an electrode structure having no bus electrode.

Since the specific resistance decreases when the thickness of the transparent electrode layer increases, a countermeasure for eliminating the need for the bus electrode by increasing the thickness of the transparent electrode layer is considered. However, when the transparent electrode layer is made thicker, other problems such as a decrease in light transmittance and a significant increase in the time and cost required to produce the transparent electrode layer itself occur.

For the above reason, in the electronic element for electronic light control spectacles, it is difficult to achieve both low resistance and high transmittance without using a bus electrode with existing transparent electrode layers made of ITO.

On the other hand, the first transparent electrode layer 24 and the second transparent electrode layer 25 according to the above embodiments have conductive properties with lower resistance than transparent electrode layers formed of only ITO, and realize a simple electrode structure having no bus electrode without sacrificing transmittance or significantly increasing the thickness.

As shown in Fig. 2 to Fig. 4, in the electrochromic element 20 of the present embodiment, there is no bus electrode in either the light control area E1 or the peripheral area E2. In the light control area E1, the first transparent electrode layer 24 and the second transparent electrode layer 25 are in contact with the entire front and back surfaces of the electrochromic layer 26, and other conductive members such as a bus electrode are not interposed therebetween. In addition, in the peripheral area E2, the entire areas of the projecting part 24a and the projecting part 25a are in contact with the sealing material 32 without other conductive members such as a bus electrode in the structure being interposed therebetween. In addition, there are no other conductive members such as a bus electrode between the first substrate 21 and the first transparent electrode layer 24 (including the projecting part 24a) and between the second substrate 22 and the second transparent electrode layer 25 (including the projecting part 25a).

In other words, the electrochromic element 20 of the present embodiment has an electrode structure in which all parts (particularly, the projecting part 24a and the projecting part 25a in the peripheral area E2) of the first transparent electrode layer 24 and the second transparent electrode layer 25 do not have a bus electrode. Here, the electrode structure having no bus electrode is not limited to a bus electrode having a shape extending over the entire circumference and width of the peripheral area E2 but also means that there is no bus electrode having a shape with a notched part.

For example, if there is a C-shaped bus electrode that is interrupted in a part of the annular peripheral area E2 in the circumferential direction, when focusing on only the range of the part in the circumferential direction, there is no bus electrode. In addition, when the lens has a thin bus electrode that occupies only a part of the width of the peripheral area E2 in the radial direction, in a cross-sectional view as shown in Fig. 3 and Fig. 4, an area in which the bus electrode is present and an area in which the bus electrode is not present are included in the peripheral area E2. However, in these electrode structures, at least in the area in which the bus electrode is present, it is not possible to avoid problems that the shapes of the lens and spectacle frame are restricted.

On the other hand, since the first transparent electrode layer 24 and the second transparent electrode layer 25 in the present embodiment have a uniform film-like configuration that does not include elements that restrict the position like bus electrodes, they can be formed with a sufficient area, and then cut into an arbitrary shape conforming to the lens 19. Therefore, the electrode structure of the electrochromic element 20 does not restrict settings of the shapes of the light control lenses 11 and 12, and contributes to increasing the degree of freedom in designing of the electronic light control spectacles 10.

The first electrode terminal 40 and the second electrode terminal 41 can be incorporated after the electrochromic element 20 is completed (after the sealing material 32 is applied). In addition, the first electrode terminal 40 and the second electrode terminal 41 can be arranged at any position within the peripheral area E2 as long as the projecting part 24a and the projecting part 25a are present.

The positions of the first electrode terminal 40 and the second electrode terminal 41 shown in Fig. 1 and Fig. 2 are set near the areas in which the temples 16 and 17 and the bridge 18 are connected to the rims 14 and 15. Therefore, the first electrode terminal 40 and the second electrode terminal 41 are positioned on a path of the power supply wiring member 50, which is generally linearly disposed along the upper edge sides of the rims 14 and 15 and the bridge 18, and the shape of the simple and short power supply wiring member 50 is realized.

However, it is also possible to select a case in which the first electrode terminal 40 and the second electrode terminal 41 are provided at positions other than those shown. For example, in the electrochromic element 20, since the projecting parts 24a and 25a of the transparent electrode layers 24 and 25 are also present at the downward cross-sectional position shown in Fig. 4, the first electrode terminal 40 and the second electrode terminal 41 can also be provided at the cross-sectional position. In this case, the power supply wiring member 50 provided inside the spectacle frame 13 can be extended to a shape that wraps around the rims 14 and 15 along the way, and thus can be connected to the first electrode terminal 40 and the second electrode terminal 41.

In this manner, unlike the bus electrode incorporated into the laminated structure during a procedure of producing the electrochromic element, the arrangement of the first electrode terminal 40 and the second electrode terminal 41 can be selected after the electrochromic element 20 is formed according to the shapes of the lens 19 and the spectacle frame 13, and the degree of freedom in designing of the electronic light control spectacles 10 is not restricted. Therefore, even with an electrode structure in which the first electrode terminal 40 and the second electrode terminal 41 are provided in addition to the first transparent electrode layer 24 and the second transparent electrode layer 25, the above effects can be obtained.

While the present invention has been described based on the illustrated embodiments above, the present invention is not limited thereto, and various modifications and changes can be made without departing from the gist of the invention.

For example, the light control lenses 11 and 12 according to the above embodiment have a structure in which the electrochromic element 20 is superimposed on the surface (convex surface) of the lens 19. Unlike this, a light control lens may have a structure in which an electrochromic element is arranged inside (inserted into) the lens in the thickness direction.

In the above embodiment, in the electrochromic element 20, the first electrode terminal 40 and the second electrode terminal 41 are provided. Unlike this, it is possible to select a configuration in which transparent electrode layers such as the first transparent electrode layer 24 and the second transparent electrode layer 25 are directly connected to the power supply wiring member without a metal electrode terminal therebetween. For example, the projecting part 24a of the first transparent electrode layer 24 and the projecting part 25a of the second transparent electrode layer 25 may be extended to positions protruding from the outer peripheral surface of the electrochromic element 20 and connected to the power supply wiring member.

Parts of the electrochromic element 20 other than the transparent electrode layers 24 and 25 may be formed of a material other than the above materials. For example, the substrates 21 and 22 may be formed of glass.

The electrochromic element 20 according to the above embodiment includes the first substrate 21 and the second substrate 22 on both sides of the electrochromic film 23, but the present invention can also be applied to electronic elements including a single substrate.

### [Industrial Applicability]

When the present invention is applied, it is possible to increase the degree of freedom in the shape of the lens combined with the electronic element and to improve design properties and productivity of the electronic light control spectacles.

Priority is claimed on Japanese Patent Application No. 2021-82862, filed May 17, 2021, the content of which is incorporated herein by reference.

## Claims

1. An electronic element for electronic light control spectacles, which is combined with a lens and exhibits a light control effect when electric energy is supplied, comprising:
substrates, a pair of transparent electrode layers provided on the substrates, and a light control layer provided between the pair of transparent electrode layers,
wherein a sealing material that covers at least a part of the transparent electrode layer is provided in a peripheral area outside a light control area in which the pair of transparent electrode layers and the light control layer overlap, and
wherein each of the pair of transparent electrode layers has a projecting part extending to the peripheral area, and the projecting part is in contact with the sealing material without other conductive members being interposed therebetween.

2. The electronic element for electronic light control spectacles according to claim 1,
wherein a pair of electrode terminals connected to the pair of transparent electrode layers and exposed on the outer surfaces of the substrates are provided in the peripheral area.

3. The electronic element for electronic light control spectacles according to claim 1 or 2,
wherein the pair of transparent electrode layers are formed of IZO.

4. The electronic element for electronic light control spectacles according to claim 1 or 2,
wherein the pair of transparent electrode layers include a conductive fiber layer formed of conductive fibers.

5. The electronic element for electronic light control spectacles according to claim 1 or 2,
wherein the electronic element is an electrochromic element that causes a reversible change in optical properties due to an oxidation-reduction reaction in the light control layer when a voltage is applied to the pair of transparent electrode layers.
